# EUROPEAN PATENT APPLICATION

(11) **EP 2 270 672 A1**
(43) Date of publication of application: **05.01.2011**
(21) Application number: 09008678.6
(22) Date of filing: 02.07.2009
(51) Int. Cl.: G06F 13/16

(54) **Flash memory control device**

(71) Applicant: Giga-Byte Technology Co., Ltd., Hsin-Tien Taipei-Hsien (TW)
(72) Inventor: Lin, Hou-Yuan, Taipei Hsien (TW); Chen, Chen-Shun, Taipei Hsien (TW); Liao, Tse-Hsine, Taipei Hsien (TW); Hung, Ju-Yi, Taipei Hsien (TW)
(74) Representative: Brandenburger, Karin

(57) **Abstract**

A flash memory control device includes a controller and an expansion device. The expansion device is electrically connected to the controller and one and more flash memory devices for temporarily storing data, integrating data and presenting processing status, wherein the controller orders the expansion device to transform data to the one and more flash memory devices or receive data from the one and more flash memory devices according to processing status.

## Description

### BACKGROUND OF THE INVENTION

### 1. Field of the invention

The present invention relates to control devices, and more particularly to a flash memory control device.

### 2. Description of related art

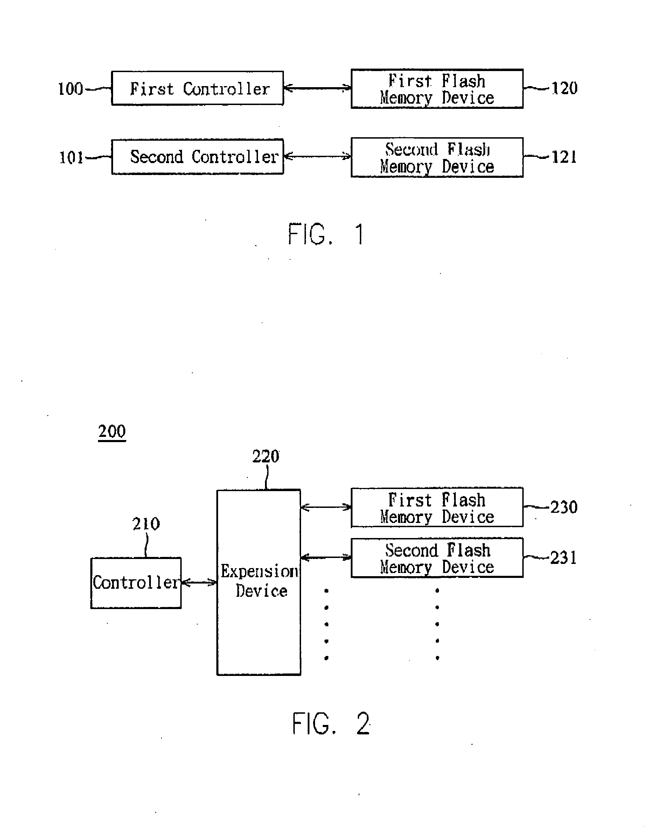

In a conventional flash memory control device, a controller only is coupled to or controls one flash memory device (such as a USB flash drive). Referring to Fig. 1, a first controller 100 and a second controller 101 respectively connect a first flash memory device 120 and a second flash memory device 121. When a flash memory with higher capacity is needed, the user has to switch for a higher-capacity flash memory device, or even replace with a new controller for matching a high-capacity flash memory device.

In this situation, the old and new flash memory devices or the controllers can not be used at the same time, thus, it is a waste of resources. Tharefore, it is necessary to provide a flash memory control device capable of being connected with a plurality of flash memories.

### SUMMARY OF THE INVENTION

The present invention is to provide a flash memory control device. The flash memory control device includes a controller and an expansion device. The expansion device is electrically coupled to the controller and at least one flash memory device, for temporary storage of data, integration of data, and showing processing status, wherein the controller controls the expansion device to send data to the at least one flash memory device or to receive data from the at least one flash memory device according to a processing status.

The above-mentioned flash memory control device employs an expansion device to have the controller controling a plurality of flash memory devices, thereby expanding capacity of using the flash memory.

Other advantages and novel features will be drawn from the following detailed description of preferred embodiment with the attached drawings, in which:

### BRIEF DESCRIPTION OF THE DRAWINGS

FIG. 1 shows a structure view of a traditional flash memory control device; and

FIG. 2 shows a structure view of a flash memory control device in accordance with a preferred embodiment of the present invention.

### DETAILED DESCRIPTION OF THE INVENTION

In order to more easily and clearly understand the above objectives, features and advantages of the present invention, a more detailed description of the preferred embodiment of the present invention, together with the drawings, is given as follows.

FIG. 2 shows the structure view of the flash memory control device in accordance with the preferred embodiment of the present Invention. The flash memory control device 200 includes a controller 210, and an expansion device 220. The controller 210 of the flash memory control device 200 may be a microprocessor or a chip, such as a CPU and so on. The controller 210 has an output pin thereon, such as a NVRAM pin, which is used to control flash memory devices 230. 231. The expansion device 220 acts as a bridging interface for the controller 210 and the flash memory devices 230, 231, and is used to temporarily store data, integrate data, as well as show data status, to allow the controller 210 to control a plurality of flash memory devices 230, 231 at the same time. In this embodiment, the expansion device 220 includes a cache (not shown) therein, therefore, the controller 210 can store some necessary data temporarily and in high speed by the cache. The expansion device 220 may process some data such as distribution or rearrangement of data. In addition, the expansion device 220 also has a function of showing a control status. For example, the controller 210 or flash memory devices 230, 231 determine whether the expansion device 220 Is In a busy or idle status or not by sending a status signal, such as a signal of the data status or the processing status. When the expansion device 220 is in an idle status, the expansion device 220 receives or transmits data at speed up to a maximum bandwidth of 300MB/s, Furthermore, when the expansion device 220 is connected with two or more external flash memory devices, flash memory device, it can run RAID 0, RAID 1 and RAID 10 functions. For the efficiency of transmission and receiving of data, compared with a number of separate flash memory devices, the speed of the expansion device 220 is much faster. Or, when the expansion device 220 expands to sufficient capacity, a more complex storage setting is implemented, such as data back-up of a system.

While the present invention has been illustrated by the description of preferred embodiments thereof, and while the preferred embodiments have been described in considerable detail, it is not intended to restrict or in any way limit the scope of the appended claims to such details. Additional advantages and modifications within the spirit and scope of the present Invention will readily appear to those skilled in the art. Therefore, the present invention is not limited to the specific details and illustrative examples shown and described.

## Claims

1. A flash memory control devices, comprising:
a controller; and
an expansion device electrically coupled to the controller and at least one flash memory device for temporary storage of data, integration of data, and showing processing status, wherein the controller controls the expansion device to send data to the at least one flash memory device or to receive data from the at least one flash memory device according to processing status.

2. The flash memory control device according to claim 1, wherein the controller is a microprocessor or a chip.

3. The flash memory control device according to claim 1, wherein the expansion device further comprises a cache.

4. The flash memory control device according to claim 1, wherein when the expansion device is electrically coupled to two or more flash memories, the expansion device selectively implements RAID 0, RAID and RAID 10 functions.

5. The flash memory control device according to claim 1, wherein when the processing status Is idle, the bandwidth of the flash memory control device is a maximum bandwidth of the controller as the flash memory control device sends or receives data.
